# EUROPÄISCHE PATENTANMELDUNG

(11) **EP 1 229 431 A2**
(43) Veröffentlichungstag der Anmeldung: **07.08.2002**
(21) Anmeldenummer: 02000217.6
(22) Anmeldetag: 11.01.2002
(51) Int. Cl.: G06F 3/00

(54) **Bedien- und/oder Steuerungseinrichtung für mindestens eine elektronische Einrichtung und Verfahren zur Bedienung und/oder Steuerung**

(30) Priorität: 30.01.2001 DE 10104162
(71) Anmelder: Volkswagen Aktiengesellschaft, 38436 Wolfsburg (DE)
(72) Erfinder: Rieck, Klaus, 38108 Braunschweig (DE); Walter, Heike, Dr., 38126 Braunschweig (DE); Poppe, Holger, 38114 Braunschweig (DE); Lilienthal, Jörg, 38518 Gifhorn (DE)

(57) **Zusammenfassung**

Es wird eine Vorrichtung zur Bedienung und/oder Steuerung von elektronischen Einrichtungen (9) und ein entsprechendes Verfahren beschrieben.

Gemäß der Erfindung ist vorgesehen, über Magneffeldänderungen mindestens eines Magneten (4), der an mindestens einem Körperteil (7) einer Bedienperson angeordnet ist, die Bewegung des Körperteils zu erfassen und in Bedien- und/oder Steuerungssignale der elektronischen Einrichtung (9) umzusetzen.

## Beschreibung

Die Erfindung betrifft eine Einrichtung zur Erfassung einer relativen Position und/oder relativen Bewegung zwischen mindestens einem ersten Körper oder Körperteil und zumindest einem zweiten Körper oder Körperteil, wobei der erste Körper oder das erste Körperteil eine Erfassungseinrichtung aufweist, deren Ausgangssignal in Abhängigkeit des Magnetfeldes mindestens eines an dem mindestens einem zweiten Körper oder Körperteil angeordneten Magneten veränderbar ist oder sich verändert, eine Vorrichtung zur Bedienung und/oder Steuerung von mindestens einer elektronischen Einrichtung und ein Verfahren zur Bedienung und/oder Steuerung von mindestens einer elektronischen Einrichtung.

In der Zukunft werden Geräte und Anlagen in allen Lebensbereichen über elektronische Einrichtungen gesteuert. Zusätzlich nimmt die Anzahl der Multimediaeinrichtungen, beispielsweise zur Informationsbeschaffung oder zur Unterhaltung, immer mehr zu. Aus diesem Grund kommt auch der Ausbildung der Mensch-Maschine-Schnittstelle, insbesondere der Bedien- oder Betätigungseinrichtung immer größere Bedeutung zu. Sie soll einfach handhabbar sein und es sollen alle Steuer- und Auswahlfunktionen durch sie durchführbar sein.

So ist unter der Internet-Adresse "www.bosswave.com" am 08.01.2001 eine drahtlose Maus zur Steuerung von Computerfunktionen, beispielsweise einer Cursorbewegung auf der Anzeigeeinrichtung, beschrieben, die auf einen Finger einer Bedienperson aufgesteckt werden kann, wobei die Bedienung der Betätigungselemente der Maus durch die anderen Finger der gleichen Hand erfolgen kann. Die Kommunikation zwischen der Maus und dem Computer erfolgt drahtlos über Funk.

Aus der DE 196 20 332 A1 ist weiterhin eine Vorrichtung zur kabellosen Cursor-Fernsteuerung bekannt, bei der eine Bewegungsumsetzung erfolgt, indem eine Bewegung oder Ausrichtung der in der Hand der Bedienperson lagernden Betätigungseinrichtung in eine Cursorbewegung auf der Anzeigeeinrichtung erzeugt. Die Bewegungsumsetzung wird dadurch erreicht, daß vom Handteil der Betätigungseinrichtung spezielle geometrische Signalformen ausgesandt werden, welche kabellos an die Empfängereinheit des Computers gelangen. Bei Bewegung des Handtellers mit der Maus ergibt sich eine zugeordnete Verlagerung des geometrischen Signalbildes im Raum als auch im Empfänger. Durch Vergleich der Signalsituation vor der Bewegung zu während der Bewegung bzw. nach einem Teil der Bewegung wird ein Vektor errechnet, dessen Richtung der auszuführenden Cursorbewegung entspricht.

Zusätzlich ist aus der EP 696 014 B1 eine druckempfindliche Dateneingabeeinrichtung für Elektronikeinrichtungen bekannt, die um einen menschlichen Finger getragen werden kann. Die Eingabeeinrichtung weist eine Hülle auf, die um die Spitze eines menschlichen Fingers tragbar ist und um die selbe geschlossen ist. Die Hülle besitzt einen Aufsatz, der auf der selben angeordnet ist, und einen Drucksensor, der einen Druck auf den Aufsatz erfaßt. Des weiteren ist eine Elektronikschnittstelle, die mit dem Drucksensor wirksam gekoppelt ist, zum Senden von Signalen an die Elektronikeinrichtung vorgesehen, wodurch bewirkt wird, daß sich ein Cursor, der auf der Anzeigeeinrichtung der Elektronikeinrichtung angezeigt wird, entsprechend eines Druckes auf den Aufsatz von einer ersten Position in eine zweite Position bewegt.

Die Aufgabe der Erfindung ist es, ein Verfahren und eine Vorrichtung zur Bedienung und/oder Steuerung von elektronischen Einrichtungen zu schaffen, mit deren Hilfe die Bedienung und/oder Steuerung für den Benutzer übersichtlich handhabbar ist, wobei die Bedieneinrichtung vom Benutzer mit geführt werden kann und gegebenenfalls für mehrere auch verteilt angeordnete elektronische Einrichtungen eingesetzt werden kann.

Die Aufgabe wird durch die Merkmale der Patentansprüche 1,11 und 21 gelöst. Vorteilhafte Aus- und Weiterbildungen sind in den Unteransprüchen dargestellt.

Der Grundgedanke der Erfindung besteht darin, eine Eingabemöglichkeit für mindestens eine elektronische Einrichtung zu schaffen, bei der die Bewegung einer Bedienperson und/oder eines Körperteils der Bedienperson direkt oder indirekt auf die Bedienung oder Steuerung derselben übertragen wird. Damit ist es möglich das Verhalten bzw. die Bewegung einer Bedienperson zur Bedienung und/oder Steuerung von elektronischen Einrichtungen zu verwenden.

Erfindungsgemäß ist eine Einrichtung zur Erfassung der relativen Position und/oder der relativen Bewegung zwischen mindestens zwei Körpern oder Körperteilen vorgesehen, deren Ausgangssignal in Bedien- und/oder Steuerungssignale für die mindestens eine elektronische Einrichtung umgesetzt wird.

Die Einrichtung zur Erfassung der relativen Position oder relativen Bewegung besteht uns mindestens einem Magneten, der an einem der zweiten Körper oder Körperteile angeordnet ist, und mindestens einer Erfassungseinrichtung, die an einem der ersten Körper oder Körperteile angeordnet ist und welche die Änderungen des Magnetfeldes des Magneten, die auf Grund der Bewegung der ersten und zweiten Körper oder Körperteile relativ zueinander und damit durch die Bewegung des Magneten zur Erfassungseinrichtung entstehen, erfaßt und ein entsprechendes Ausgangssignal bildet. Dabei können auch mehrere Magneten an mehreren zweiten Körpern oder Körperteilen vorgesehen sein, deren Magnetfeld von der Erfassungseinrichtung erfaßt wird, wodurch es möglich ist, die Bewegung mehrerer Körper oder Körperteile zur Bedienung und/oder Steuerung der mindestens einen elektronischen Einrichtung einzusetzen. Des weiteren kann auch vorgesehen sein, daß mehrere Erfassungseinrichtungen an einem oder mehreren ersten Körpern oder Körperteilen vorgesehen sind, die das Magnetfeld bzw. die Magnetfeldänderungen eines oder mehrerer Magnete erfassen.

Vorzugsweise erfaßt die mindestens eine Erfassungseinrichtung als Magnetfeldänderung die Richtung, vorzugsweise in mehreren Achsen, und/oder die Stärke des Magnetfeldes des sich relativ zur Erfassungseinrichtung bewegenden Magneten.

Nach einer Ausbildung der Erfindung ist die mindestens eine Erfassungseinrichtung als Hallsensor, als magnetoresistiver Sensor oder als Fluxgate Sensor, wie er beispielsweise aus der DE 196 21 886 bekannt ist, ausgebildet.

Nach einer Weiterbildung der Erfindung ist das Ausgangssignal der mindestens einen Erfassungseinrichtung einer Verarbeitungseinrichtung zuführbar, welche das Ausgangssignal in Bedien- und/oder Steuerungssignale für die elektronische Einrichtung umsetzt. Dabei kann die Verarbeitungseinrichtung der zu bedienenden und/oder steuernden elektronischen Einrichtung zugeordnet sein, wobei dann zwischen der mindestens einen Erfassungseinrichtung und der Verarbeitungseinrichtung eine drahtlose Kommunikationsstrecke vorgesehen ist. Eine andere Möglichkeit besteht darin, der Erfassungseinrichtung eine Verarbeitungseinrichtung zuzuordnen, wobei hier zwischen der Verarbeitungseinrichtung und der zu bedienenden und/oder steuernden elektronischen Einrichtung eine drahtlose Kommunikationsstrecke vorgesehen ist.

Eine vorteilhafte Ausbildung der Erfindung sieht vor, daß die Ausgangsgröße der Erfassungseinrichtung zur Menü- und/oder Funktionssteuerung der mindestens einen elektronischen Einrichtung vorgesehen ist. Vorzugsweise ist dabei die elektronische Einrichtung eine Multifunktions-Bedieneinrichtung oder eine Multimediaeinrichtung. Des weiteren kann das Ausgangssignal der Erfassungseinrichtung auch zur Steuerung eines Cursors auf der Anzeigeeinrichtung der elektronischen Einrichtung eingesetzt werden.

Zur Umsetzung der Bewegung einer Bedienperson in Signale zur Bedienung und/oder Steuerung der mindestens einen elektronischen Einrichtung ist die mindestens eine Erfassungseinrichtung an mindestens einem ersten Körperteil der Bedienperson und zumindest ein Magnet an mindestens einem zweiten relativ zu dem mindestens einem ersten Körperteil bewegbaren Körperteil der Bedienperson angeordnet, wobei über das Ausgangssignal der vorgesehenen Erfassungseinrichtungen die Position des mindestens einen zweiten Körperteils zu dem mindestens einen ersten Körperteil und/oder die Bewegung des mindestens einen zweiten Körperteils zu dem mindestens einen ersten Körperteil wiedergebbar ist.

Eine andere Variante der Erfindung sieht vor, daß der erste oder zweite Körper oder das erste oder zweite Körperteil ein fester Bezugspunkt im Raum ist und der jeweils andere Körper oder das jeweils andere Körperteil ein sich zu dem Bezugspunkt bewegbares Körperteil einer Bedienperson ist, wobei über das Ausgangssignal der Erfassungseinrichtung die Position und/oder Bewegung des mindestens einen ersten oder zweiten Körperteils der Bedienperson zum Bezugspunkt wiedergebbar ist. Es besteht also die Möglichkeit entweder die mindestens eine Erfassungseinrichtung oder den mindestens einem Magneten an dem festen Bezugspunkt im Raum anzuordnen, vorzugsweise an oder in der Nähe der elektronischen Einrichtung. Die Bedienperson muß in diesem Fall also entweder nur den mindestens einen Magneten oder die mindestens eine Erfassungseinrichtung mit sich führen.

Nachfolgend wird die Erfindung anhand eines Ausführungsbeispiels näher beschrieben. Die zugehörige Zeichnung zeigt eine Ausbildung der erfindungsgemäßen Einrichtung zur Bedienung und Steuerung mindestens einer elektronischen Einrichtung. In der Fig. Ist ein Arm 5 einer Bedienperson dargestellt. Der Arm weist als erstes Körperteil 6 einen Unterarm auf, an dem eine Erfassungseinrichtung 1 in Form eines Hallsensors mit Hilfe eines Armbandes 2 befestigt ist. Das zweite, relativ zum ersten Körperteil 6 bewegbare Körperteil ist ein Finger 7, an dem mittels eines Rings 3 ein Magnet 4, vorzugsweise ein Seltenerd-Magnet, angeordnet ist. Der Magnet 4 erzeugt ein definiertes Magnetfeld, das von der Erfassungseinrichtung 1 zumindest in seiner Richtung erfaßt wird. Die Erfassungseinrichtung sollte dabei so ausgebildet sein, daß das Magnetfeld zumindest in zwei Achsen, vorzugsweise in drei Achsen erfaßt wird. Die Stärke des Magnetfeldes des Magneten 4 sollte bestimmte Grenzen nicht überschreiten, um Einflüsse auf magnetfeldsensitive Gegenstände, beispielsweise Scheckkarten oder Disketten auszuschließen und um die Haftung ferromagnetischer Gegenstände, wie Schlüssel und Werkzeuge, gering zu halten.

Durch die Bewegung des Fingers 7 und damit auch des Magneten 4 relativ zum Unterarm 6 und damit zur Erfassungseinrichtung 1 wird in der Erfassungseinrichtung eine Änderung des Magnetfeldes in mehreren Richtungen detektiert und von der Erfassungseinrichtung 1 ein entsprechendes, die Richtungsänderung wiedergebendes analoges Ausgangssignal gebildet und einer Verarbeitungseinrichtung 8 übergeben. Die Verarbeitungseinrichtung 8 kann mit der Erfassungseinrichtung 1 eine Einheit bilden und ebenfalls am Armband 2 angeordnet sein. Es besteht jedoch auch die Möglichkeit aus Gründen der Miniaturisierung der Einrichtung am Armband, die Verarbeitungseinrichtung 8 direkt in der zu bedienenden und/oder steuernden elektronischen Einrichtung 9 anzuordnen. In diesem Fall muß eine Möglichkeit geschaffen werden, die analogen Ausgangssignale der Erfassungseinrichtung 1 der Verarbeitungseinrichtung 8 drahtlos zu übermitteln. Die Verarbeitungseinrichtung 8 filtert das Ausgangssignal der Erfassungseinrichtung und wandelt es in digitale Bedien- und Steuerungssignale für die elektronische Einrichtung 9 um. Die digitalen Bedien- und Steuerungssignale werden, sofern die Verarbeitungseinrichtung 8 nicht in der elektronischen Einrichtung 9 direkt angeordnet ist, drahtlos an die elektronische Einrichtung übermittelt. Hierzu eignet sich beispielsweise der sogenannte Bluetooth Standard.

Mit Hilfe der im Ausführungsbeispiel beschriebenen Ausführung der Erfindung kann beispielsweise über die Bewegung des Fingers 7 relativ zum Unterarm 6 der Bedienperson eine Cursorsteuerung auf einer nicht dargestellten Anzeigeeinrichtung der elektronischen Einrichtung 9, beispielsweise einer Multifunktions-Bedieneinrichtung, durchgeführt werden, wobei durch die Bewegung des Fingers in y-Richtung eines Bezugskoordinatensystems der Cursor auf der Anzeige von oben nach unten und umgekehrt und durch die Bewegung des Fingers in x-Richtung des Bezugskoordinatensystems nach rechts und links bewegt werden. Durch die Erfassung einer Bewegung des Fingers in z-Richtung läßt sich beispielsweise eine Auswahl- oder Enterfunktion realisieren.

Neben der Realisierung einer Cursorsteuerung mit Hilfe der Erfindung sind jedoch auch andere Bedien- und Steuerungsaufgaben durchführbar. So ist zum Beispiel denkbar, die Bewegung eines oder mehrerer Körperteile in eine Bewegung von Darstellungen auf der Anzeigeeinrichtung oder in die Bewegung eines zu steuernden oder zu führenden Bauteils direkt oder indirekt umzusetzen. Dafür können auch Relativbewegungen anderen Körperteile der Bedienperson über eine entsprechende Anordnung weiterer Erfassungseinrichtungen und entsprechender Magnete zur Bedienung und/oder Steuerung eingesetzt werden.

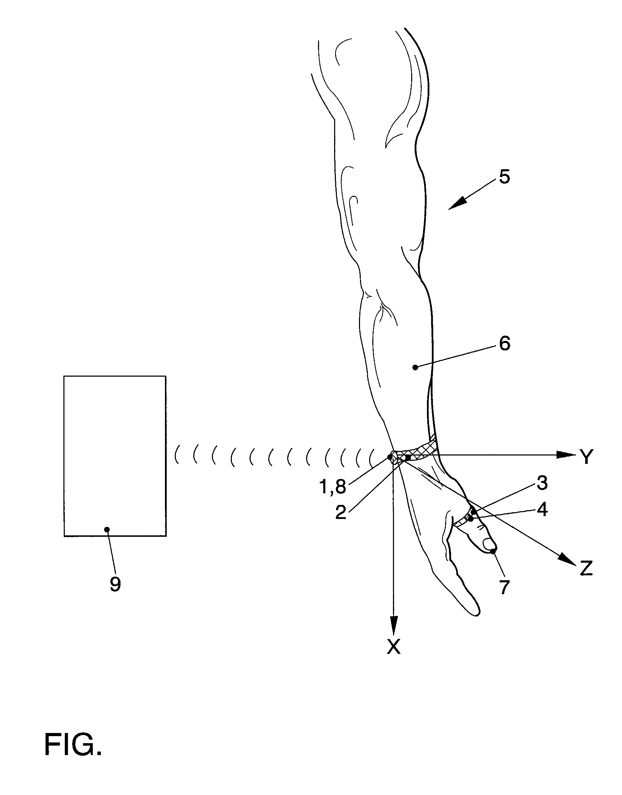

## Patentansprüche

1. Einrichtung zur Erfassung einer relativen Position und /oder einer relativen Bewegung zwischen mindestens einem ersten Körper oder einem ersten Körperteil (6) und zumindest einem zweiten Körper oder zweiten Körperteil (7), wobei der erste Körper oder das erste Körperteil (6) eine Erfassungseinrichtung (1) aufweist, deren mindestens eine Ausgangsgröße in Abhängigkeit des Magnetfeldes mindestens eines an dem zweiten Körper oder dem zweiten Körperteil (7) angeordneten Magneten (4) veränderbar ist oder sich verändert, **dadurch gekennzeichnet, daß** die mindestens eine Ausgangsgröße der Erfassungseinrichtung (1) zur Bedienung und/oder Steuerung von elektronischen Einrichtungen (9) einsetzbar und/oder eingesetzt ist.

2. Einrichtung nach Anspruch 1, **dadurch gekennzeichnet, daß** die Erfassungseinrichtung (1) die Richtung und/oder die Stärke des Magnetfeldes des sich relativ zur Erfassungseinrichtung (1) bewegenden Magneten (4) erfaßt.

3. Einrichtung nach Anspruch 1 oder 2, **dadurch gekennzeichnet, daß** die Ausgangsgröße der Erfassungseinrichtung (1) einer Verarbeitungseinrichtung (8) zuführbar ist, welche die Ausgangsgröße in Bedien- und/oder Steuerungssignale für die elektronischen Einrichtungen (9) umsetzt.

4. Einrichtung nach einem der Ansprüche 1 bis 3, **dadurch gekennzeichnet, daß** die Erfassungseinrichtung (1) ein Magnetfeldänderungen erfassender Hallsensor, ein magnetoresistiver Sensor oder ein Fluxgate Magnetometer ist.

5. Einrichtung nach einem der vorangehenden Ansprüche, **dadurch gekennzeichnet, daß** die Verarbeitungseinrichtung (8) der zu steuernden und/oder zu bedienenden elektronischen Einrichtung (9) zugeordnet ist und zwischen der Erfassungseinrichtung (1) und der Verarbeitungseinrichtung (8) eine drahtlose Kommunikationsstrecke vorgesehen ist.

6. Einrichtung nach einem der Ansprüche 1 bis 4, **dadurch gekennzeichnet, daß** die Verarbeitungseinrichtung (8) der Erfassungseinrichtung (1) zugeordnet ist und zwischen der Verarbeitungseinrichtung (8) und der zu bedienenden und/oder steuernden elektronischen Einrichtung (9) eine drahtlose Kommunikationsstrecke vorgesehen ist.

7. Einrichtung nach einem der vorstehenden Ansprüche, **dadurch gekennzeichnet, daß** die Ausgangsgröße der Erfassungseinrichtung (1) zur Menü- und/oder Funktionssteuerung der mindestens einen elektronischen Einrichtung (9), insbesondere einer Multifunktions-Bedieneinrichtung oder Multimediaeinrichtung, einsetzbar und/oder eingesetzt ist.

8. Einrichtung nach einem der vorstehenden Ansprüche, **dadurch gekennzeichnet, daß** die Ausgangsgröße der Erfassungseinrichtung (1) zur Cursorsteuerung auf einer Anzeigeeinrichtung der elektronischen Einrichtung (9), insbesondere einer Multifunktions-Bedieneinrichtung oder einer Multimediaeinrichtung, einsetzbar und/oder eingesetzt ist.

9. Einrichtung nach einem der Ansprüche 1 bis 8, **dadurch gekennzeichnet, daß** zumindest eine Erfassungseinrichtung (1) an zumindest einem ersten Körperteil (6) einer Bedienperson und zumindest ein Magnet (4) an mindestens einem zweiten zu dem mindestens einen ersten Körperteil bewegbaren Körperteil (7) einer Bedienperson befestigbar ist, wobei über das Ausgangssignal der mindestens einen Erfassungseinrichtung (1) die Position des mindestens einen zweiten Körperteils (7) zu dem mindestens einem ersten Körperteil (6) und/oder die Bewegung des mindestens einen zweiten Körperteils (7) zu dem mindestens einem ersten Körperteil (6) wiedergebbar ist.

10. Einrichtung nach einem der Ansprüche 1 bis 8, **dadurch gekennzeichnet, daß** der erste oder zweite Körper oder das erste oder zweite Körperteil (6, 7) ein fester Bezugspunkt im Raum ist und das zweite oder erste Körperteil (6, 7) ein sich zu dem festen Bezugspunkt bewegbares Körperteil einer Bedienperson ist, wobei über das Ausgangssignal der Erfassungseinrichtung (1) die Position und/oder Bewegung des ersten oder zweiten Körperteils (6, 7) der Bedienperson zum Bezugspunkt wiedergebbar ist.

11. Vorrichtung zur Bedienung und/oder Steuerung von elektronischen Einrichtungen (9), **dadurch gekennzeichnet, daß** eine Einrichtung zur Erfassung von relativen Positionen und/oder relativen Bewegungen zwischen mindestens einem ersten Körper oder einem ersten Körperteil (6) und mindestens einem zweiten Körper oder Körperteil (7) vorgesehen ist, deren Ausgangsgröße einer Verarbeitungseinrichtung (8) zuführbar ist, welche die Ausgangsgröße in Bedienund/oder Steuerungssignale für die elektronischen Einrichtungen (9) umsetzt.

12. Vorrichtung nach Anspruch 11, **dadurch gekennzeichnet, daß** die Einrichtung zur Erfassung von relativen Positionen und/oder Bewegungen zwischen mindestens einem ersten Körper oder einem ersten Körperteil (6) und mindestens einem zweiten Körper oder Körperteil (7) mindestens einen an einem der zweiten Körper oder Körperteile (7) angeordneten Magneten (4) und mindestens eine Erfassungseinrichtung (1) an mindestens einem der ersten Körper oder Körperteile (6) aufweist, wobei von der Erfassungseinrichtung (1) Magnetfeldänderungen, die durch die Bewegung des Magneten (4) relativ zur Erfassungseinrichtung (1) entstehen, erfaßbar sind.

13. Vorrichtung nach Anspruch 12, **dadurch gekennzeichnet, daß** von der Erfassungseinrichtung (1) die Richtung und/oder die Stärke des Magnetfeldes erfaßbar sind.

14. Vorrichtung nach einem der Ansprüche 11 bis 13, **dadurch gekennzeichnet, daß** die Erfassungseinrichtung (1) ein Magnetfeldänderungen erfassender Hallsensor, ein magnetoresistiver Sensor oder ein Fluxgate Sensor ist.

15. Vorrichtung nach einem der Ansprüche 11 bis 14, **dadurch gekennzeichnet, daß** die Verarbeitungseinrichtung (8) der zu steuernden und/oder zu bedienenden elektronischen Einrichtung (9) zugeordnet ist und zwischen der Erfassungseinrichtung (1) und der Verarbeitungseinrichtung (8) eine drahtlose Kommunikationsstrecke vorgesehen ist.

16. Vorrichtung nach einem der Ansprüche 11 bis 14, **dadurch gekennzeichnet, daß** die Verarbeitungseinrichtung (8) der Erfassungseinrichtung (1) zugeordnet ist und zwischen der Verarbeitungseinrichtung (8) und der zu bedienenden und/oder zu steuernden elektronischen Einrichtung (9) eine drahtlose Kommunikationsstrecke vorgesehen ist.

17. Vorrichtung nach einem der Ansprüche 11 bis 16, **dadurch gekennzeichnet, daß** die Ausgangsgröße der Erfassungseinrichtung (1) zur Menü- und/oder Funktionssteuerung der mindestens einen elektronischen Einrichtung (9), insbesondere einer Multifunktions-Bedieneinrichtung oder Multimediaeinrichtung, einsetzbar und/oder eingesetzt ist.

18. Vorrichtung nach einem der Ansprüche 11 bis 17, **dadurch gekennzeichnet, daß** die Ausgangsgröße der Erfassungseinrichtung (1) zur Cursorsteuerung auf einer Anzeigeeinrichtung der elektronischen Einrichtung (9), insbesondere einer Multifunktions-Bedieneinrichtung oder Multimediaeinrichtung, einsetzbar oder eingesetzt ist.

19. Vorrichtung nach einem der Ansprüche 11 bis 18, **dadurch gekennzeichnet, daß** zumindest eine Erfassungseinrichtung (1) an zumindest einem ersten Körperteil (6) einer Bedienperson und zumindest ein Magnet (4) an mindestens einem zweiten zu dem ersten Körperteil (6) bewegbaren Körperteil (7) einer Bedienperson befestigbar ist und die relative Position und/oder Bewegung der beiden Körperteile (6, 7) zueinander über die Erfassungseinrichtung (1) erfaßbar ist, wobei über das Ausgangssignal der Erfassungseinrichtung (1) die Position des zweiten Körperteils (7) zum ersten Körperteil (6) und/oder die Bewegung des zweiten Körperteils (7) zum ersten Körperteil (6) wiedergebbar ist.

20. Vorrichtung nach einem der Ansprüche 11 bis 18, **dadurch gekennzeichnet, daß** der erste oder der zweite Körper oder das erste oder zweite Körperteil (6, 7) ein fester Bezugspunkt im Raum ist und das zweite oder erste Körperteil (6, 7) ein sich zu dem festen Bezugspunkt bewegbares Körperteil einer Bedienperson ist, wobei über das Ausgangssignal der Erfassungseinrichtung (1) die Position und/oder Bewegung des ersten oder zweiten Körperteils (6, 7) der Bedienperson zum Bezugspunkt wiedergebbar ist.

21. Verfahren zur Bedienung und/oder Steuerung von mindestens einer elektronischen Einrichtung (9), **dadurch gekennzeichnet, daß** die relativen Positionen und/oder relativen Bewegungen zwischen mindestens einem ersten Körper oder einem ersten Körperteil (6) und mindestens einem zweiten Körper oder Körperteil (7) erfaßt und in Bedien- und/oder Steuersignale zur Bedienung und/oder Steuerung für die elektronische Einrichtung (9) umgesetzt werden.

22. Verfahren nach Anspruch 21, **dadurch gekennzeichnet, daß** an mindestens einem zweiten Körper oder Körperteil (7) ein Magnet (4) und an mindestens einem ersten Körper oder Körperteil (6) mindestens eine Erfassungseinrichtung (1) angeordnet wird, wobei von der Erfassungseinrichtung (1) Magnetfeldänderungen, die durch die Bewegung des Magneten (4) relativ zur Erfassungseinrichtung (1) entstehen, erfaßt werden.

23. Verfahren nach Anspruch 22, **dadurch gekennzeichnet, daß** von der Erfassungseinrichtung (1) die Richtung und/oder die Stärke des Magnetfeldes erfaßt wird.

24. Verfahren nach einem der Ansprüche 21 bis 23, **dadurch gekennzeichnet, daß** die erfaßten relativen Positionen und oder Bewegungen zwischen mindestens einem der ersten Körperteile (6) oder Körper und mindestens einem der zweiten Körper oder Körperteilen (7) zur Menü- und/oder Funktionssteuerung der mindestens einen elektronischen Einrichtung (9), insbesondere einer Multifunktions-Bedieneinrichtung oder Multimediaeinrichtung, eingesetzt werden.

25. Verfahren nach einem der Ansprüche 21 bis 24, **dadurch gekennzeichnet, daß** die erfaßten relativen Positionen und oder Bewegungen zwischen mindestens einem der ersten Körperteile (6) oder Körper und mindestens einem der zweiten Körper oder Körperteilen (7) zur Cursorsteuerung auf einer Anzeigeeinrichtung der elektronischen Einrichtung (9), insbesondere einer Multifunktions-Bedieneinrichtung oder Multimediaeinrichtung, eingesetzt werden.

26. Verfahren nach einem der Ansprüche 21 bis 25, **dadurch gekennzeichnet, daß** zumindest eine Erfassungseinrichtung (1) an zumindest einem ersten Körperteil (6) einer Bedienperson und zumindest ein Magnet (4) an mindestens einem zweiten, zu dem ersten Körperteil bewegbaren Körperteil (7) einer Bedienperson befestigt wird und die relative Position und/oder Bewegung der beiden Körperteile (6, 7) zueinander über die Erfassungseinrichtung (1) erfaßt werden und zur Bedienung und/oder Steuerung der mindestens einen elektronischen Einrichtung (9) verwendet werden.

27. Verfahren nach einem der Ansprüche 21 bis 25, **dadurch gekennzeichnet, daß** der erste oder zweite Körper oder das erste oder zweite Körperteil (6, 7) ein fester Bezugspunkt im Raum ist und das zweite oder erste Körperteil (6, 7) ein sich zu dem festen Bezugspunkt bewegbares Körperteil einer Bedienperson ist und die relative Position und/oder Bewegung des Körperteils (6, 7) der Bedienperson zum Bezugspunkt zur Bedienung und/oder Steuerung der mindestens einen elektronischen Einrichtung (9) verwendet werden.
